# EUROPÄISCHE PATENTSCHRIFT

(11) **EP 0 300 240 B1**
(45) Veröffentlichungstag und Bekanntmachung des Hinweises auf die Patenterteilung: **03.01.1996**
(21) Anmeldenummer: 88110421.0
(22) Anmeldetag: 29.06.1988
(51) Int. Cl.: C08K 5/00

(54) **Suspendiermittel zur Herstellung wässriger Kunststoffdispersionen**
Suspending agent for the preparation of aqueous dispersions of plastics
Agent de suspension pour la préparation de dispersions aqueuses de matières plastiques

(30) Priorität: 24.07.1987 DE 3724573
(43) Veröffentlichungstag der Anmeldung: 25.01.1989
(73) Patentinhaber: DR. TH. BÖHME KG CHEM. FABRIK GMBH & CO., D-82538 Geretsried (DE)
(72) Erfinder: Balbach, Günter, Dr., D-8190 Wolfratshausen (DE); Döcker, Horst, D-8192 Geretsried 2 (DE)
(74) Vertreter: Fehners, Klaus Friedrich, Dipl.-Ing., Dipl.-Wirtsch.-Ing.

(56) Entgegenhaltungen:
- EP-A- 0 210 747
- DE-A- 2 054 885
- FR-A- 1 464 572

## Beschreibung

Die Erfindung bezieht sich auf ein Suspendiermittel zur Herstellung wässriger Kunststoffdispersionen nach dem Oberbegriff des Patentanspruches.

Die Herstellung stabiler, wässriger Kunststoffdispersionen ausgehend von wasserunlöslichen Kunststoffpulvern mit Hilfe von Suspendierzitteln wird seit langer Zeit für die verschiedensten Zwecke durchgeführt. Aus der IT-PS 301 282 ist es bekannt, für die Stabilisierung wässriger Kunststoffdispersionen verschiedene wasserlösliche Polymere einzusetzen. Bei Verwendung von Salzen polymerer Carbonsäuren wird dadurch eine bessere Benetzung der Kunststoffoberfläche erzielt und mit der durch die polymeren Carbonsäuren bewirkten Viskositätserhöhung eine Sedimentation des Kunststoffpulvers verhindert, so daß insgesamt eine gute Dispergierung des Kunststoffpulvers im Wasser erfolgt.

Dieses bekannte Verfahren läßt sich - wie in der DE-AS 12 42 858 beschrieben - dadurch verbessern, daß Copolymeresate der Acryl-und Methacrylsäure mit Acrylsäureamid eingesetzt werden.

Auch wenn die so hergestellten Kunststoffdispersionen lagerstabil sind, entsprechen sie jedoch nicht immer den Anforderungen an die Entmischungsbeständigkeit, wie sie beispielsweise für das Aufbringen auf Substrate mittels moderner Auftragsaggregate bei hoher Laufgeschwindigkeit verlangt werden.

In der DE-PS 20 07 971 und DE-PS 22 29 108 wird beschrieben, daß sich diese Nachteile vermeiden lassen, wenn das Suspendiermittel, mit dem die wässrigen Kunststoffdispersionen hergestellt werden, neben den Salzen polymerer Carbonsäuren als Verdicker, zusätzlich freie Fettsäure in feinstverteilter Form enthält.

Alle aus dem Stand der Technik bekannten Suspendiermittel sind anionenaktiv. Die beispielsweise bei der textilen Verarbeitung notwendige Wasserfestigkeit der fertigen Beschichtungen wird dadurch erreicht, daß die als Verdicker eingesetzten Salze leicht flüchtiger Basen beim Trockenprozeß die Base gasförmig abspalten und dabei die wasserunlösliche Säure des aktiven anionischen Molekülteils des Salzes zurücklassen. Die beim Trockenprozeß verdampfenden Basen, wie beispielsweise Ammoniak, Methylamin, Morpholin oder Trimethylamin, sind toxisch. So ergibt sich beispielsweise aus der MAK-Liste der Deutschen Forschungsgemeinschaft ein MAK-Wert für Ammoniak von 50 ppm, für Morpholin von 20 ppm, für Methylamin und Trimethylamin von 10 ppm. Bei der Verarbeitung der mit den bekannten Suspendiermitteln hergestellten wässrigen Kunststoffdispersionen ist es dabei unvermeidlich, daß diese toxischen Basen in die Luft des Arbeitsraumes gelangen. Werden die wässrigen Kunststoffdispersionen bestimmungsgemäß für die Beschichtung zur Film- bzw. Kleberpunktbildung erhitzt, dann entweichen die flüchtigen toxischen Basen vollständig und werden mit der Abluft der Heizkanäle ins Freie geblasen. Zur Vermeidung dieses Nachteils müssen daher aufwendige und kostenintensive Abgasreinigungsanlagen installiert werden.

Aus der DE-OS 20 54 885 ist es nun bekannt, daß die als Umsetzungsprodukte von Fettalkoholen und Ethylenoxid oder Propylenoxid mit Diisocyanaten erhaltenen Diurethane auch für die Herstellung von Emulsionsverdickungen für Farbpasten in der Textildruckerei verwendet werden können. Die vorbeschriebenen Emulsionen und Dispersionen weisen allerdings einen wesentlich geringeren Teilchendurchmesser als die Kunststoffpulver auf, die heute zur Herstellung von Sekundärdispersionen verwendet werden.

Wie Versuche mit den bekannten Diurethanen zeigten, weisen sie durchweg eine gute Netzwirkung für die Kunststoffoberfläche auf. Die mit den Diurethanen hergestellten wässrigen Sekundärdispersionen von Kunststoffpulvern mit einer hauptsächlichen Kornfraktion von 10 µm bis 80 µm haben jedoch die Eigenschaften von fast newton'schen Flüssigkeiten. Dispersionen mit newton'schem Fließverhalten erfüllen jedoch die Forderungen, die mit dem Auftrag von Kunststoffdispersionen auf ein Substrat, beispielsweise mittels einer Rakel, durch Beschichtung mittels Walzen, durch Aufsprühen, durch Tiefdruck oder durch Rotationssiebdruck gestellt werden, nicht. Wird beispielsweise die Viskosität der erhaltenen Kunststoffpaste durch eine geringe Konzentration der Diurethane so niedrig gehalten, wie sie für die Verarbeitung auf schnelllaufenden Maschinen erforderlich ist, dann tritt eine Sedimentation des Kunststoffs beim Lagern der Pasten auf. Auch reicht bei Verwendung von Diurethanen als Verdickungsmittel die Wasserretention nicht mehr aus, um ein "Trockenlaufen" der Beschichtungsmassen auf den Maschinen zu verhindern. Durch die geringe Wasserretention wird nämlich infolge der bei der Verarbeitung auftretenden hohen Scherkräfte das Wasser aus der Dispersion ausgepreßt, bis letztendlich eine feste krümelige Masse zurückbleibt, die für die Beschichtungen unbrauchbar ist.

Zwar lassen sich unter Verwendung der bekannten Diurethane stabile wässrige Kunststoffpasten herstellen, wenn man die Diurethankonzentration erhöht, jedoch sind derart hergestellte Kunststoffpasten für eine bestimmungsgemäße Verarbeitung wegen ihrer zu hohen Viskosität nicht geeignet, da insbesondere infolge der bei mechanischer Beanspruchung größer werdenden Scherkräfte das "Trockenlaufen" der Kunststoffpasten auf den Maschinen noch schneller erfolgt.

Der Erfindung liegt daher die Aufgabe zugrunde, ein Suspendiermittel zur Herstellung wässriger Kunststoffdispersionen für Beschichtungszwecke, beispielsweise für die textile Beschichtung, zu schaffen, das umweltfreundlich ist und zugleich alle Forderungen für eine gute Verarbeitbarkeit der Kunststoffdispersionen auf den Beschichtungsmaschinen erfüllt.

Ein diese Aufgabe lösendes Suspendiermittel zur Herstellung wässriger Kunststoffdispersionen und eine dieses Suspendiermittel enthaltende Kunststoffdispersion ist in den Patentansprüchen gekennzeichnet.

Erfindungsgemäß läßt sich eine stabile wässrige Kunststoffdispersion, die umweltfreundlich ist und die alle Forderungen für eine gute Verarbeitbarkeit erfüllt, dadurch herstellen, daß für die Dispergierung ein Suspendiermittel eingesetzt wird, welches 0,5 - 4 Gewichtsprozent eines bekannten Diurethans der allgemeinen Formel: 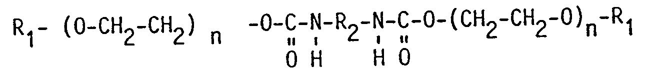 wobei bedeutet:
- R₁ =: aliphatischer Kohlenwasserstoffrest, verzweigt oder linear, gesättigt oder ungesättigt mit einer Kohlenstoffzahl von 12 - 20
- R₂ =: -(CH₂)₆- , 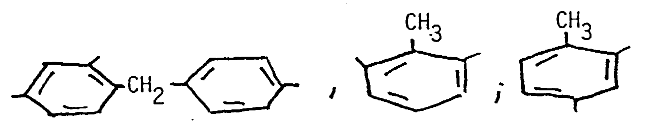
- n =: ganze Zahl von 60 - 80
in Wasser gelöst enthält und dem 0,1 - 0,5 Gewichtsprozent Fettalkoholoxalkylate der allgemeinen Formel: 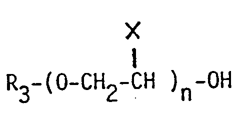 wobei bedeutet:
- R₃ =: aliphatischer Kohlenwasserstoffrest, verzweigt oder unverzweigt, mit einer Gesamtkohlenstoffzahl von 6 - 20;
- X =: H oder CH₃
- n =: ganze Zahl von 5 - 15
zugesetzt sind, wobei als Lösungsmittel ausschließlich Wasser eingesetzt wird.

Der erfindungsgemäße Zusatz der Fettalkoholoxalkylate zu den bekannten Diurethanen ergibt ein Suspendiermittel, mit dem stabile, gut auf den Beschichtungsmaschinen verarbeitbare und umweltfreundliche wässrige Kunststoffdispersionen für Beschichtungszwecke herstellbar sind. Mit den erfindungsgemäßen Suspendiermitteln, die zusätzlich zu den Diurethanen Fettalkoholoxalkylate enthalten, wird es ermöglicht, Kunststoffpasten herzustellen, die einerseits aufgrund ihrer niedrigen Viskosität für eine Verarbeitung auf den Beschichtungsmaschinen geeignet sind und bei denen andererseits trotz der niedrigen Viskosität keine Sedimentation der Kunststoffe beim Lagern erfolgt. Besonders überraschend war es, daß aus solchen wässrigen Kunststoffdispersionen vollkommen wasserfeste Filme und Kleberpunkte auf dem Substrat herstellbar sind, obwohl die hydrophilen Dispergiermittel in den getrockneten Beschichtungen erhalten bleiben.

Die mit dem erfindungsgemäßen Suspendiermittel hergestellten wässrigen Kunststoffdispersionen sind in besonderem Maße für die bekannten Beschichtungszwecke geeignet, da die Viskosität der gebrauchsfertigen wässrigen Kunststoffdispersion so niedrig ist, daß sie durch eine Pumpe gefördert und filtriert werden kann und auch aufgrund der niedrigen Viskosität die Beanspruchung von Maschinenteilen begrenzt ist. Einerseits wird bei Anwendung der wässrigen Kunststoffdispersionen ein unerwünschtes Durchschlagen der Beschichtungsmasse nach dem Auftrag auf ein beispielsweise textiles Substrat verhindert, andererseits jedoch eine ausgezeichnete Verankerung auf dem Substrat erzielt. Wird beispielsweise mit dem Punktdruckverfahren die Kunststoffdispersion auf das Substrat aufgetragen, erhält man eine scharfe Begrenzungslinie für die beschichtete Fläche. Vollflächige Beschichtungen zeichnen sich dadurch aus, daß sich die Oberflächen nach dem Auftrag selbständig glätten.

Da das erfindungsgemäße Suspendiermittel neben Wasser als Lösungsmittel nur nichtionogene Tenside enthält, verdampfen beim Trocknungsprozeß im Gegensatz zur Verwendung von bekannten Suspendiermitteln keine toxischen Stoffe, so daß das erfindungsgemäße Suspendiermittel auch äußerst umweltfreundlich ist.

Im folgenden wird die Erfindung anhand einiger Beispiele näher erläutert:

### Beispiel 1:

Es wird ein "Stammansatz" hergestellt, welcher 20 Gewichtsteile eines Diurethans aus einem Umsetzungsprodukt von 1 mol linearem aliphatischem Alkohol der Kettenlängen C₁₂-C₁₈ mit 60 mol Ethylenoxid und Hexamethylendiisocyanat in stöchiometrischem Verhältnis gelöst in 80 Gewichtsteilen Wasser enthält.

Die vorstehend definierten Diurethane werden durch chemische Reaktion von Diisocyanaten und Umsetzungsprodukten von Ethylenoxid mit aliphatischen Alkoholen unter den üblichen Bedingungen der Urethanbildung hergestellt (z. B. Vieweg Höchtlen, Kunststoffhandbuch Band VII. "Polyurethane", Carl Hanser Verlag, München 1066). Die Umsetzungsprodukte von Ethylenoxid mit aliphatischen Alkoholen werden ebenfalls nach bekannten Methoden hergestellt (z. B. A.M. Payuin Epoxydverbindungen, Springerverlag, Berlin, Göttingen, Heidelberg 1958).

Ein Suspendiermittel für Kunststoffpulver wird folgendermaßen gemischt:
12,5 Gewichtsteile Stammansatz
87 Gewichtsteile Wasser
werden bei Zimmertemperatur verrührt. Dann werden 0,5 Gewichtsteile eines Umsetzungsproduktes von 1 mol linearem Alkohol der Kettenlänge C₁₂-C₁₈ mit 10 mol Ethylenoxid zugesetzt und verrührt.

Zu diesen 100 Gewichtsteilen Dispergiermittel werden 7 Gewichtsteile eines handelsüblichen flüssigen Sulfonamidweichmachers unter Rühren zugefügt und anschließend 40 Gewichtsteile eines handelsüblichen Copolyamidpulvers der Korngrößenverteilung 0 - 80 µm unter Rühren eingestreut. Es entsteht eine glatte Paste, die sich ohne Schwierigkeiten auf schnellaufenden Rotationssiebdruckmaschinen zu Punktbeschichtungen auf Textilien verarbeiten läßt. Auch bei längerem Laufen der Maschinen wird kein Trockenlaufen der Pasten beobachtet. Die erhaltenen Gewebe eignen sich als Einlagestoffe für die Konfektion. Die Haftung wird durch eine Feinwäsche oder eine chemische Reinigung nicht vermindert.

Ein Muster der Paste wurde drei Wochen gelagert. Es trat keine Sedimentation auf.

### Beispiel 2:

Eine Aluminiumhydroxiddispersion wird nach folgender Rezeptur hergestellt:
10 Gewichtsteile Stammansatz, wie in Beispiel 1 beschrieben, und 89,5 Teile Wasser werden bei Zimmertemperatur verrührt.
Dann werden 0,5 Gewichtsteile eines Umsetzungsproduktes von 1 mol linearem aliphatischem Alkohol der Kettenlänge C₁₂-C₁₈ mit 10 mol Ethylenoxid zugesetzt und verrührt.

In die entstehenden 100 Teile Dispergiermittel werden 30 Gewichtsteile Aluminiumhydroxid Hydrargillit der Korngrößenverteilung 5 µm bis 50 µm unter Rühren eingestreut. Es entsteht eine glatte Paste.

In einem zweiten Gefäß wird folgende Mischung angesetzt:
12,5 Gewichtsteile des Stammansatzes entsprechend Beispiel 1,
87 Gewichtsteile Wasser.

Bei Zimmertemperatur wird gut verrührt und dann 0,5 Gewichtsteile eines Umsetzungsproduktes von 1 mol linearem aliphatischem Alkohol der Kettenlänge C₁₆-C₁₈ mit 10 mol Ethylenoxid zugesetzt und eingerüht. Unter ständigem Rühren werden in 100 Gewichtsteile der erhaltenen Lösung 40 Gewichtsteile Hochdruck-Polyethylen-Pulver der Korngrößenverteilung 5 µm bis 30 µm eingebracht.

100 Gewichtsteile der Aluminiumhydroxiddispersion werden mit 100 Gewichtsteilen der Polyethylendispersion gemischt. Es wird eine glatte Paste erhalten, welche mit einer Rakelstreichanlage auf die Rückseite eines textilen Teppichbodens aufgebracht wird. Die Gewichtszunahme nach dem Trocknen beträgt 500g/m. Die Beschichtung ist teilweise in den Teppichboden eingedrungen, ohne nach oben durchzuschlagen. So wird ein erwünschter Versteifungseffekt erhalten, ohne Veränderung der Oberfläche. Der Teppichboden kann thermisch bleibend verformt werden. Durch Zusatz von Aluminiumhydroxid erhält man eine selbstverlöschene Beschichtung.

## Patentansprüche

1. Suspendiermittel zur Herstellung wässriger Kunststoffdispersionen für Beschichtungszwecke, welche 0,5 - 4 Gewichtsprozent eines Diurethans der allgemeinen Formel: 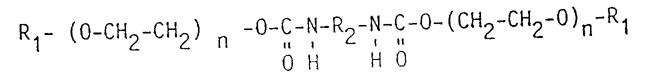 wobei bedeutet:
R₁ = aliphatischer Kohlenwasserstoffrest, verzweigt oder linear, gesättigt oder ungesättigt mit einer Kohlenstoffzahl von 12 - 20
R₂ = -(CH₂)₆- , 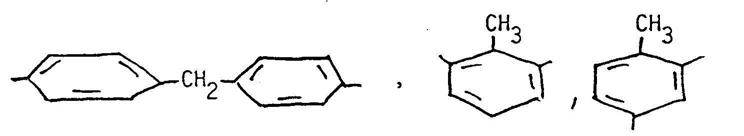
n = ganze Zahl von 60 - 80
in Wasser gelöst enthalten,
**dadurch gekennzeichnet**, daß 0,1 - 0,5 Gewichtsprozent von Fettalkoholoxalkylaten der allgemeinen Formel: 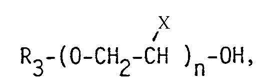 wobei bedeutet:
R₃ = aliphatischer Kohlenwasserstoffrest, verzweigt oder unverzweigt, mit einer Gesamtkohlenstoffzahl von 6 - 20
X = H oder CH₃
n = ganze Zahl von 5 - 15
zugesetzt werden, und dadurch, daß es als Lösungsmittel ausschießlich Wasser enthält.

2. Wässrige Kunststoffdispersion, dadurch gekennzeichnet, daß sie ein Suspendiermittel nach Anspruch 1 enthält.

## Claims

1. Suspending agent for producing aqueous plastics dispersions for coating purposes which contains 0.5 - 4 weight percent of a diurethane of the general formula: 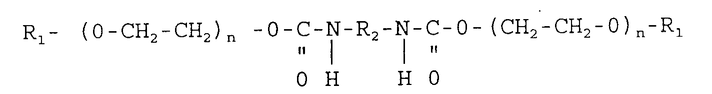 whereby:
R₁ = aliphatic hydrocarbon residue, branched or linear, saturated or unsaturated, with a carbon number of 12-20,
R₂ = -(CH₂)₆-, 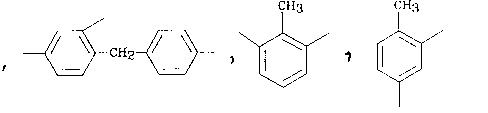
n = whole number from 60 - 80,
dissolved in water, characterised in that added to it is 0.1 - 0.5 percent by weight fatty alcohol oxalkylates of the general formula: 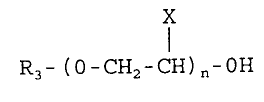 whereby,
R₃ = aliphatic hydrocarbon residue, branched or unbranched, with a total carbon number of 6 - 20;
X = H or CH₃
N = whole number of 5 - 15,
and that it contains exclusively water as the solvent.

2. Aqueous plastics dispersion, characterised in that it contains the suspending agent as claimed in claim 1.

## Revendications

1. Agent de suspension pour la préparation de dispersions aqueuses de matières plastiques, pour des buts de revêtement, contenant de 0,5 à 4 pour-cent en poids d'un diuréthanne de formule générale : 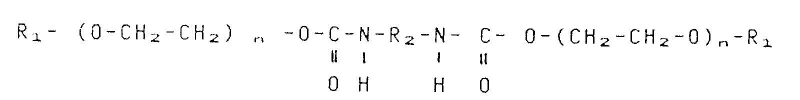 dans laquelle :
R₁ est un résidu d'hydrocarbure aliphatique, ramifié ou linéaire, saturé ou insaturé avec un nombre d'atomes de carbone compris entre 12 et 20;
R₂ est -(CH₂)₆- , 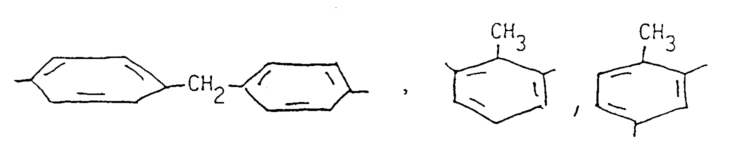
n est un nombre entier compris entre 60 et 80;
dissous dans l'eau,
caractérisé en ce que l'on ajoute de 0,1 à 0,5 pour-cent en poids d'alkylates d'alcool gras de formule générale : 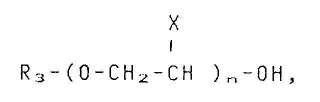 dans laquelle :
R₃ est un résidu d'hydrocarbure aliphatique, ramifié ou non ramifié, ayant un nombre total d'atomes de carbone compris entre 6 et 20;
X est H ou CH₃;
n est un nombre entier compris entre 5 et 15;
et par le fait qu'il contient comme solvant exclusivement de l'eau.

2. Dispersion aqueuse de matières plastiques, caractérisée en ce qu'elle contient un agent de suspension selon la revendication 1.
